Europäisches Patentamt

European Patent Office

Office européen des brevets

(19)

(11) Publication number: **0 263 345**
**A2**

(12) # EUROPEAN PATENT APPLICATION

(21) Application number: **87113775.8**

(22) Date of filing: **21.09.87**

(51) Int. Cl.⁴ **B24B 53/14 , B24B 41/04**

(30) Priority: **06.10.86 US 915461**

(43) Date of publication of application:
**13.04.88 Bulletin 88/15**

(84) Designated Contracting States:
**DE ES FR GB IT NL**

(71) Applicant: **Cincinnati Milacron Inc.**
**(a Delaware Corporation), 4701 Marburg**
**Avenue**
**Cincinnati, Ohio 45209(US)**

(72) Inventor: **Maack, Horst E.**
**8497 Owlwood Lane**
**Cincinnati Ohio 45043(US)**
Inventor: **Funke, Manfred M.**
**8451 Arborcrest Drive**
**Cincinnati Ohio 45236(US)**

(74) Representative: **Lally, William et al**
**FORRESTER & BOEHMERT**
**Widenmayerstrasse 4/I**
**D-8000 München 22(DE)**

(54) Grinding machine comprising a wheel dressing assembly, and dressing assembly per se.

(57) A dressing roll unit (12) is supported on a non-rotating shaft (19) clamped and maintained as a "fixed end" beam, thereby restrained against axial movement and deflection. The shaft (19) is formed with spaced-apart bearing points (28, 29), wherein wedge-shaped relief sectors (33) are formed about the shaft at the bearing points, and a roll body (18) is maintained about the bearing points with an annular clearance (32). Rotation of the dressing roll body (18) and roll thereby forms high pressure hydrodynamic wedges of oil at the relief sectors (33) and annular clearances (32), to create an extremely rigid roll mounting unit, without the need for pivoting bearing parts.

FIG. 2

## "Grinding machine comprising a wheel dressing assembly, and dressing assembly per se"

This invention relates generally to grinding machines employing a dressing assembly for conditioning the grinding wheel.

In particular, the invention concerns itself with roll-type dressing units wherein the roll is of the powered type, i.e. the roll has its own motorised assembly for imparting rotational motion to the roll before and during contact with the grinding wheel. Such dressing units are well-known in the grinding arts and are expensive and difficult to make, particularly for wide dressing paths. Of important consideration is a centerless grinding machine, where grinding wheels can typically be, up to 24 inches (610 mm) wide. In conditioning a wheel of this width, a comparable length dressing roll must be employed, and the main portion of roll support is obtained at or near the ends. In all cases, the roll must rotate. However, in certain assemblies the roll is attached to a shaft which is rotated in bearings at its ends, typically ball bearing sets. In such mounting stance, the shaft behaves as if it were a "simply supported" beam, assuming a classical deflection curve through what may be indicated as "points" of suspension at its ends.

In one prior art assembly, U.S. Patent No. 4,206,593, the dressing roll in a wide wheel dressing unit is generally tubular, and is supported on a non-rotating shaft. The shaft is held at its ends in a dressing unit housing, and the rotational support bearings comprise a plurality of pockets machined in the outer surface of bushings located on the shaft. The pockets are supplied with high pressure oil which, in typical hydrostatic bearing fashion, is supplied through a series of restrictors to each pocket. Thus, the classical hydrostatic bearing is achieved, which is self-compensating for deflection around the pocket areas. The truing assembly of the prior art suffers from several disadvantages including the necessity for supplying high pressure oil or other fluid to the bearing area and attendant pump requirements and leakage potential; the necessity of utilizing a restrictor, such as an orifice or choke coil, which may become clogged and unable to function properly; and the fact that the non-rotating shaft has relatively small end diameters and is, apparently, slid into the housing bores and locked in position. This style of assembly for the shaft does not provide the maximum stiffness.

In contrast, applicants have obviated the difficulties inherent in the prior art devices by the provision of a roll-type dressing unit, in which a relatively stationary casting is provided with very thick walls to support the shaft, and the shaft spanning the two walls is tightly clamped and thus approaching what is classically described as a "fixed end" beam that is, one having a very shallow deflection curve across its length when compared with a "simply-supported" beam. Further, applicants provide a hydrodynamic bearing system directly into the shaft at spaced-apart points, that is, where the roll body is created with accurately bored end bushings and the bushings form an annular space arond the hydrodynamic bearing points. A plurality of wedge-like reliefs are formed into the shaft surface, all going in the same direction. Low pressure oil is flowed through the roll body and, during high rotational speed of the roll a hydrodynamic wedge of oil will be driven into the wedge formations, creating an extremely stiff bearing system which, when coupled with the "fixed end" beam support system, creates an overall system of enhanced rigidity without the need for loose, pivoting bearing parts found in prior art hydrodynamic bearings.

According to this invention there is provided a grinding wheel dresser assembly comprising:

(a) a housing having opposed end walls;

(b) a support shaft extending between said end walls;

(c) a dressing roll body mounted on the shaft between the end walls;

(d) drive means to rotate the dressing roll body in a drive direction; the support shaft comprising a bearing section defining an annular space with the dressing roll body; and

(e) passage means for the delivery of fluid lubricant to said annular space; characterised in that the shaft is provided in its cylindrical surface with at least one relief formation so construction and arranged that, on rotation of the dressing roll body in the drive direction, the relief formation on the shaft coacts on fluid lubricant delivered thereto to force the fluid lubricant under high pressure into the annular space.

Conveniently the annular space is defined between the outer surface of the bearing section and an outer bushing on the interior of an axial bore of the dressing roll body.

Advantageously the support shaft comprises two bearing sections spaced by a central section, each bearing section defining an annular space with the dressing roll body and each being provided with such a relief formation, preferably a plurality of such relief formations uniformly spaced around the circumference thereof.

Advantageously each relief formation is of generally wedge-shape in cross-section and extends, in the circumferential direction of drive rotation, from a larger axial depth to a zero axial depth. In this manner on rotation of the roll body the fluid is drawn into the wedge, and forced into the annular space between the shaft and the dressing roll body to provide a hydrodynamic bearing pressure.

Advantageously the support shaft comprises opposite end portions secured within a pair of coaxial bores in the walls of the housing, said walls advantageously having a thickness (in the direction axially of the shaft) of at least 60% of the diameter of the shaft, and preferably approximately equal to the diameter of the shaft, or more, to create a stiff support for the shaft.

Conveniently a bearing for the roll body is located on the shaft in a bore in the roll body which is coaxial with said coaxial bores, and advantageously the passage means by which fluid lubricant is supplied to the relief formations is also effective to supply fluid lubricant to said roll bearing.

The invention is shown embodiment a grinding machine having a power dressing roll and means for moving the dressing assembly toward, and from a grinding wheel. An improved dressing roll mounting unit provided in the dressing assembly comprises a rigid housing with substantially thick opposed walls having a pair of in-line bores through the walls; a dressing roll body is positioned between the walls, the roll body having a bearing bore in-line with said pair of in-line bores; a roll support shaft extends through the roll body and the pair of in-line bores, where cylindrical opposite end portions of the shaft are securely fixed in the in-line bores of the dressing housing; spaced apart bearing sections are maintained on a cylindrical middle portion of the shaft, each bearing section comprising relief sectors formed in the cylindrical surface of the shaft at equal spacings around the circumference of the shaft, the relief sectors being generally wedge-shaped cross-section, extending in the same circumferential direction; a fluid medium is maintained in the relief sectors, and also in an annular space formed around the relief sectors by the roll body bore; means is provided for rotatably driving the roll body about the shaft whereby said relief sectors may establish a wedge of fluid coacting with said annular space to create a hydrodynamic pressure as said roll body is rotated.

There will now be given a detailed description, to be read with reference to the accompanying drawings, of a grinding machine comprising a grinding wheel dresser assembly, each of which is illustrative of certain aspects of this invention, having been selected for the purposes of illustrating the invention by way of example.

In the accompanying drawings:

FIGURE 1 is a front view of the grinding machine which is the preferred embodiment of this invention, showing the centerless grind wheel dressing unit thereof;

FIGURE 2 is an elevational section through the dressing roll unit, taken along the line 2-2 of Figure 1;

FIGURE 3 is a section through a hydrodynamic bearing, taken along the line-3-3 of Figure 2; and

FIGURE 4 is a section through a roll end support, taken along the line 4-4 of Figure 2.

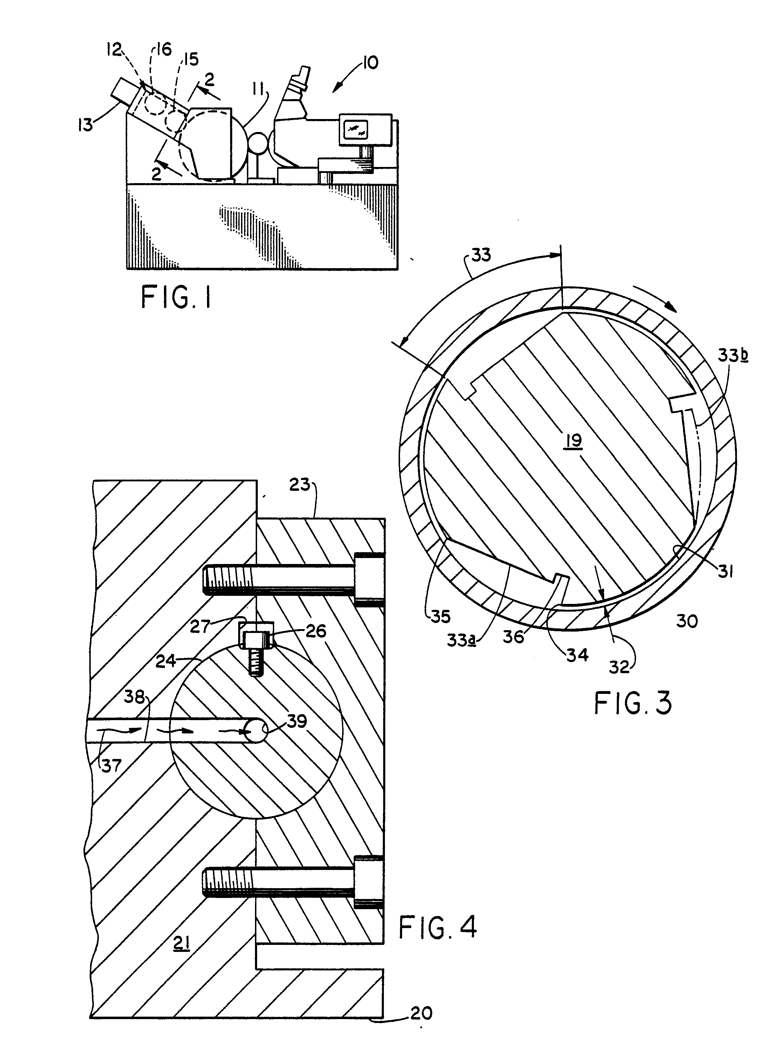

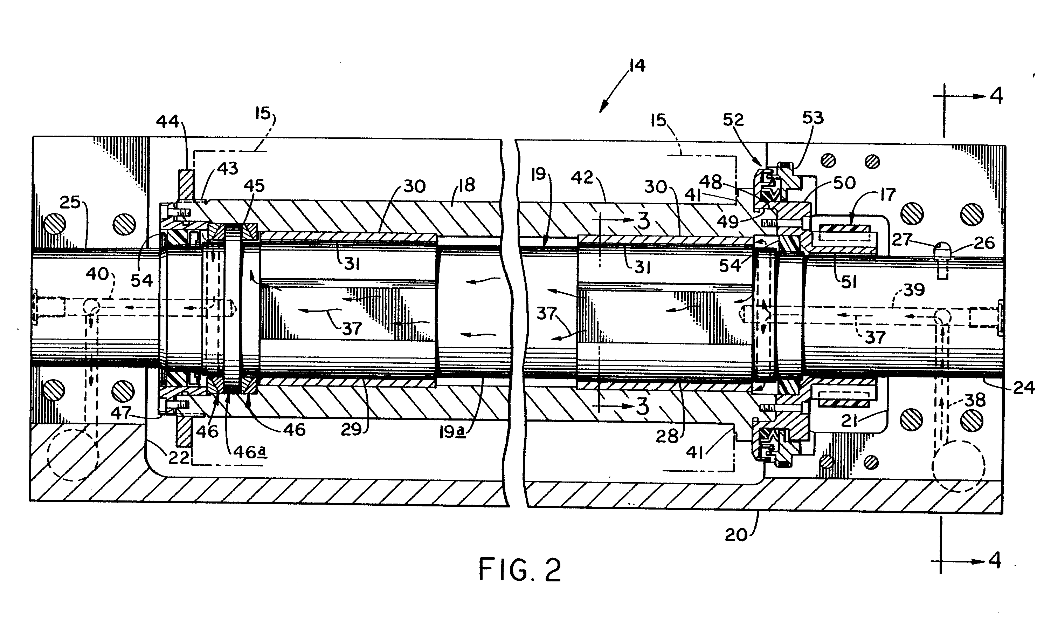

Figure 1 is a front view of an exemplary centerless grinding machine 10, having a relatively wide wheel 11, typically in the range of approximately 24 inches (610 mm). It will be appreciated that the wheel may be replaced with other wheel mounts (not shown) which may include narrow, spaced-apart wheels. The grinding machine 10 has a wheel dressing unit 12 mounted with means 13 for advancing the unit 12 toward, and retracting the unit from, the grinding wheel 11. The front portion of the dressing unit 12 carries a roll mounting unit 14 (see also Figure 2), having a motorised dressing roll of suitable length for dressing the entire width of the grinding wheel 11. The roll mounting unit 14 has a motor 16, driving through a belt and pulley system 17 to a dressing roll body 18 on which a dressing roll 15 may be mounted and which rotates about a fixed shaft 19. The roll mounting unit 14 comprises a dressing unit base or housing 20, having a pair of spaced apart opposed walls 21, 22. The walls 21 and 22 are sufficiently thick to provide for the necessary rigidity of the system, and are preferably at least 60% of the diameter of the shaft 19 to be clamped therebetween, and preferably approximately equal to the diameter of the shaft 19 or more. The walls 21, 22 have shaft retaining caps 23 (see Figure 4) which surround half of the shaft diameter, so that the unit may be assembled and disassembled easily, and accurate, spaced-apart cylindrical end sections 24, 25 of the shaft may be tightly clamped to restrain the shaft 19 from deflection and axial movement. In the preferred embodiment, the shaft ends are relatively large, compared to the bearing.

Referring to Figure 2, the dressing housing 20 is shown supporting the shaft 19 as a "fixed end" beam, wherein the shaft 19 is positioned endwise, by a screw 26 received in the shaft 19 and the head of the screw is receiving in a slot 27 in the housing wall 21. The shaft 19 has a pair of spaced-apart cylindrical identical bearing sections 28, 29 upon which the roll body 18 is positioned. The bearing sections 28, 29 are received in cylindrical bushings 30, seated within the roll body 18, and the bores 31 of the bushings 30 are dimensioned to maintain a slight annular clearance 32 (Figure 3) around the bearing sections 28, 29 of the shaft 19. The shaft 19 has a middle portion 19a, having a diameter slightly smaller than that of the bearing sections 28, 29. The enlarged sectional view through the bearing section 28 shown in Figure 3, shows that plurality of (exaggerated) generally wedge-shaped relief sector 33 are formed arond the perimeter of the shaft 19, the relief sectors 33 starting at a full depth at the beginning 34 and blending gradually to the annular clearance at the end 35 of the sector 33. The bottom of the section 33 may be a flat ramped surface 33a, arcuate surface 33b, or a combination of the two. In the preferred embodiment, a small, axial, slot 36 is machined along the sector 33 at the beginning 34, to assist in the flow of hydraulic oil 37 which is brought through interdrilling 38, 39 in the dressing housing 20 and the shaft 19, to the bearing sections 28, 29. The oil 37 is brought in at a low pressure of, approximately 20 psi., (1.4 kg/cm²) and flows through the entire bearing assembly to the opposite end where the oil 37 exits through similar interdrilling 40, carrying with it heat.

As depicted in Figure 2, the roll body 18 is generally cylindrical, with a flange 41 at one end, and a roll mounting diameter 42 adjacent the flange 41. A threaded end 43 on the diameter 42 receives a flange nut 44 for clamping a roll 15 onto the body 18. At the threaded end 43, an accurate counterbore 45 is provided, into which is placed a pair of bronze thrust bearing assemblies 46 well-known in hydraulic spindle bearing art, comprising mated spherical bearing elements coacting against a stationary flange 46a formed on the shaft 19. The thrust bearing assembly 46 is maintained in position in the counterbore 45 by a bearing retention cap 47 fastened to the end of the roll body 18. The flange 41 of the roll body 18 has a pilot diameter 48 extending into the counterbore 49 of a timing pulley 50, and the pulley 50 is formed with a clearance bore 51 around the shaft end section 24.

The pulley 50 forms a labyrinth seal 52 with a stationary ring 53, and the ring 53 is secured in the housing 20 by a half cap (not shown), similar to the shaft retaining cap 23. The bearing retention cap 47 and pulley 50 are fitted with suitable seals 54 coacting with the shaft 19.

In assembly, therefore, the shaft 19 is rigidly maintained as a "fixed end" beam, having a very shallow deflection curve. In addition, as the roll body 18 is rotated by the drive motor 16, oil fed into the system at low pressure flows into the slots 36 and is forced outwardly by the wedge surfaces 33a or 33b into the gap 32 between the bearing sections 29 and their respective bushings 30 at high pressure, producing an extremely high pressure wedge of oil film at the bearing sites, creating an extremely stiff dressing roll support system.

The sectional view of Figure 4 shows the retaining method used for supporting the shaft and the interdrilling for providing fluid flow to the bearing points.

The features disclosed in the foregoing description, or the following claims, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

**Claims**

1. A grinding wheel dresser assembly comprising:

(a) a housing (20) having opposed end walls (21, 22);

(b) a support shaft (19) extending between said end walls;

(c) a dressing roll body (18) mounted on the shaft (19) between the end walls;

(d) drive means (16) to rotate the dressing roll body in a drive direction; the support shaft (19) comprising a bearing section (28, 29) defining an annular space (32) with the dressing roll body; and

(e) passage means (36, 38, 39) for the delivery of fluid lubricant to said annular space; characterised in that the shaft (19) is provided in its cylindrical surface with at least one relief formation (33) so construction and arranged that, on rotation of the dressing roll body in the drive direction, the relief formation on the shaft coacts on fluid lubricant delivered thereto to force the fluid lubricant under high pressure into the annular space (32).

2. A dresser assembly according to Claim 1 wherein the annular space (32) is defined between the outer surface of the bearing section (28, 29) and an annular bushing (30) on the interior of an axial bore of the dressing roll body (18).

3. A dresser assembly according to one of Claims 1 and 2 wherein the support shaft (19) comprises two bearing sections (28, 29) spaced by a central section (19 a) each bearing section defining an annular space (32) with the dressing roll body (18) and each bearing section being provided with such a relief formation (33).

4. A dresser assembly according to any one of the preceding claims wherein the or each bearing section (28, 29) of the shaft (19) is provided with a plurality of relief formations (33) uniformly spaced around the circumference thereof, each relief formation being of generally wedge-shape in cross-section and extending, in the circumferential direction in the direction of drive rotation, from a larger radial depth to zero radial depth.

5. A dresser assembly according to Claim 4 wherein the support shaft (19) comprises opposite end portions (24, 25) secured within a pair of coaxial bores in the walls of the housing, a bearing (46) for the roll body (18) being located on the shaft in a bore (45) in the roll body coaxial with said coaxial bores.

6. A dresser assembly according to Claim 5 wherein said passage means (36, 38, 39) also provides fluid lubricant to said roll bearing (46).

7. A dresser assembly according to any one of the preceding claims wherein the thickness of the end walls (21, 22) is at least 60% of the diameter of the (19), preferably approximately equal to the diameter of the shaft (19) or more.

8. A grinding machine comprising a base, a rotatable grinding wheel (11) supported by the base, and a wheel dressing assembly (12) mounted on the base for movement towards and away from the wheel, the dressing assembly being in accordance with any one of the preceding claims.

9. In a grinding machine including a base; a rotatable grinding wheel (11) supported by said base; a wheel dressing assembly (12) including a powered dressing roll (15) and means (13) for moving the dressing assembly (12) and said grinding wheel (11) relatively towards each other, an improved dressing roll mounting unit, comprising: a substantially rigid dressing housing (20) having a pair of substantially thick opposed walls (21, 22) with a pair of in-line bores through said walls; a dressing roll body (18) positioned between said walls (21, 22), said roll body having a bearing bore (31) in-line with said pair of in-line bores; a roll support shaft (19) extending through said roll body (18) and said pair of in-line bores, characterised in that said shaft comprises: a pair of cylindrical opposite-end portions (24, 25) securely affixed in said pair of in-line bores; and a cylindrical middle portion (28, 29, 19a) joining said end portions (24, 25); an annular space (32) defined about said cylindrical middle portion (28, 29) of said shaft by said roll body bearing bore (31); a pair of spaced-apart bearing sections (28, 29) on said cylindrical middle portion of said shaft, each of said bearing sections comprising: a plurality of relief sectors (33) formed in the cylindrical surface of said shaft, at equal spacings around the circumferences thereof, said relief sectors (33) being of generally wedge-shaped cross-section, extending in the same circumferential direction, said relief sectors being formed of constant width along the axis of said shaft (19), and formed to full depth at the beginning of said sector thereafter blending gradually to said shaft cylindrical surface at the end of said sectors; a fluid medium (37) maintained in said annular space (32) and said relief sectors (33); and means (16) for rotatably driving said roll body (18) about said shaft (19) whereby said relief sectors (33) establish a wedge-of fluid coacting with said annular space (32) to create a hydrodynamic pressure as said roll body (18) is rotated.

10. Any novel feature or novel combination of features hereinbefore described and/or as shown in the accompanying drawings.

FIG. 1

FIG. 3

FIG. 4

FIG. 2

0 263 345